Europäisches Patentamt

(19) European Patent Office

Office européen des brevets

(11) Publication number: **0 160 485**
**B1**

(12) **EUROPEAN PATENT SPECIFICATION**

(45) Date of publication of patent specification: 08.03.89

(21) Application number: 85302805.8

(22) Date of filing: 22.04.85

(51) Int. Cl.⁴: **B 05 B 15/12,** B 05 B 15/04,
B 05 B 5/08

(54) Method and apparatus for powder coating elongated objects.

(30) Priority: 30.04.84 US 605292

(43) Date of publication of application:
06.11.85 Bulletin 85/45

(45) Publication of the grant of the patent:
08.03.89 Bulletin 89/10

(84) Designated Contracting States:
BE CH DE FR GB LI NL

(56) References cited:
FR-A-2 178 339
US-A-3 598 626
US-A-3 960 323

(73) Proprietor: NORDSON CORPORATION
555 Jackson Street P. O. Box 151
Amherst Ohio 44001 (US)

(72) Inventor: Zeiss, James F.
4231 Ivanhoe Drive
Lorain Ohio (US)
Inventor: Newman, Allen
1445 North Durkee Road
Grafton Ohio 44044 (US)
Inventor: Lissy, Gunther J.
109 Northwood Hollow Court
Amherst Ohio (US)

(74) Representative: Allen, Oliver John Richard et al
Lloyd Wise, Tregear & Co. Norman House
105-109 Strand
London, WC2R 0AE (GB)

## Description

This invention relates to coating systems, and, more particularly, to a method and apparatus for powder coating one or more elongated products such as wire, rods or pipe according to the preambles of claims 7 and 1 respectively.

The practice of electrostatic spraying of protective liquid coating materials such as paint is well established and commercially practiced. In recent years, however, there has been a great deal of interest and development in electrostatic spraying of solid particulate materials. These so-called powder spraying systems enable solid paints or other coating materials to be applied to a substrate without a liquid carrier or solvent. Advantages of powder spraying systems over liquid spraying systems include eliminating the cost of the liquid carrier, increased ease of application and control, less expensive application equipment, a wider range of film thickness capability and the elimination or at least a dramatic reduction of exhaust gases expelled to the atmosphere.

Electrostatic powder spray systems operate on the principle of transporting a finely divided powder, generally on the order of from 10 to 50 microns, to a spray gun or spray head while entrained in an air or gaseous stream. The powder is subsequently transferred from the gun to the substrate by an electrostatic charge applied to the powder and an opposite charge on the substrate. Once applied to the substrate the powder is generally adhered as a film by heat fusion.

Powder spraying systems such as disclosed in U.S. Patent No. 3,960,323 and other patents assigned to the assignee of this invention, are currently used for many applications and are gaining widespread acceptance commercially. Such systems generally include a powder spray booth having top, bottom, side and end sections in which a plurality of electrostatic spray guns and a powder filtering system are disposed. In most known systems, the top of the booth is formed with a slot to receive an endless conveyor along which a plurality of articles to be coated are disposed. Each of the articles is suspended from the conveyor by one of a plurality of spaced hooks or other convenient means to place them in general alignment with the electrostatic spray guns. The spray guns are disposed at selected locations within the powder booth to create a uniform spray pattern of powder so as to assure each of the articles passing through the spray booth receives a complete and even coating of powder.

While the process of electrostatic spraying of solid particulate materials has been applied to a variety of articles, prior to this invention the coating of essentially continuous or elongated articles such as pipe, rods or wire has generally been conducted by other methods such as the electrostatic spraying of a liquid coating. For the reasons outlined above, coating with solid particulate materials is much more desirable than using liquid materials. US-A-3 598 626 describes a method for electrically powder coating an elongated article in a spray chamber. However, existing designs of powder spray systems are incapable of accommodating simultaneously a plurality of continuous elongated articles. While commonly used conveyor systems such as described above for moving articles through a powder spray booth could conceivably be adapted to transport pipe, rods, wire or similar articles, it is probable tat only a single article of this nature could be handled at one time to assure the proper coating is applied. Particularly for small gauge wire or similar articles, this would be an extremely inefficent and uneconomical use of existing powder spray booths.

It has therefore been an object of this invention to provide a method and apparatus for the powder coating of elongated articles, preferably a number of such articles simultaneously.

In accordance with the invention an apparatus for coating articles moving therethrough with a powder material comprises a powder spray booth having a pair of spaced, opposed end walls and electrostatic powder spray gun means disposed within the powder spray booth and operable to dispense electrostatically charged powder onto the elongated articles for coating thereof, characterised in that one of the end walls is formed with a plurality of spaced, first openings and the other of the end walls is formed with a plurality of second, spaced openings in alignment with the first openings, the first and second openings each being formed to receive at least one of the elongated articles when moved inwardly through a first opening and outwardly through an aligned second opening, in that a partition is mounted between adjacent 'first' openings in one end wall and extends toward the other end wall, adjacent partition means forming individual compartments therebetween in which respective aligned first and second openings are disposed, to separate the elongated articles from one another, and in that an electrostatic powder spray gun means is disposed within each of the compartments.

The partitions effectively prevent most of the powder from spray guns in adjacent compartments from disrupting and/or disturbing the spraying pattern of powder within each individual compartment. This assures even and complete coating of each continuous article.

Preferably at least one upper and lower electrostatic spray gun is disposed at appropriate intervals along each of the compartments so as to create a spraying pattern of solid particulate material within each compartment for the individual continuous articles.

Although the compartmentalized structure of such powder spray booths is different from existing powder spray booths, it has been found that conventional filtering systems may be utilized.

Suitably advancing means engage each elongated article and operate to move them between respective aligned openings through the powder spray booth. A variety of known means for advancing such elongated articles through the spray booth between the openings in the end sections may be used.

The invention will now be further described by way of example with reference to the accompanying drawings in which:

Figure 1 is an overall perspective view in partial cross-section of a powder spraying system of this invention;

Figure 2 is an end view in full elevation of the powder spray system of Figure 1.

Referring to the drawings, the apparatus for the powder coating of elongated articles is labeled generally with the reference numeral 11. The apparatus 11 in one embodiment may include a spray booth 13 having a base portion containing a filter recovery system 15 and an absolute filter 17 connected to the filter/recovery system 15 through a duct 19. The duct 19 connects to the filter/recovery system 15 by means of a quick-disconnect connection 21 mounted in hole 23 formed in the base portion of the spray booth 13. Duct 19 communicates the interior of the filter/recovery system 15 to a blower 27 associated with absolute filter 17 which creates a negative pressure in the filter recovery system 15 as will be more fully discussed below. The blower exhausts onto a plenum 29 having filters 31 which clean any air discharged therethrough. Other filtering and particulate collection systems could also be used.

The spray booth 13 defines a controlled area for spraying powder and comprises a ceiling section 35, opposed side walls 37 and 39 with side wall 37 having an access opening 41 formed therein, opposed end walls 45 and 47 and a floor area 49. As mentioned above, prior art spray booths generally include a ceiling section having an elongated opening to receive a conveyor upon which articles to be coated are disposed for movement through the spray booth. As shown in the drawings, the ceiling section 35 of spray booth 13 is continuous although it may be open for the admission of air into the booth so as to obtain proper air flow volumes and velocity through the booth.

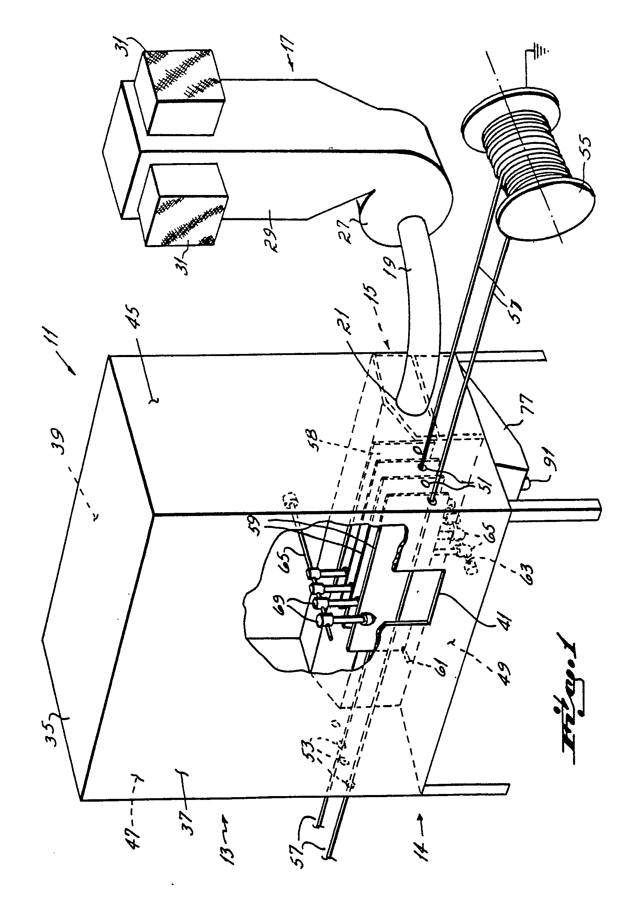

To accommodate elongated articles such as wire, pipe or rods, the end walls 45 and 47 of the spray booth 13 have spaced aligned openings 51 and 53, respectively, which are shaped and sized to receive a particular elongated article to be coated. As shown in Figure 1, a reel 55 of wires 57, which reel 55 is grounded, is disposed adjacent the spray booth 13 in alignment with the openings 51 in end wall 45. Although a plurality of wires 57 are shown and used for purposes of illustration, it should be understood that other elongated articles such as rods, pipes and the like may be accommodated by the apparatus.

In the embodiment shown herein, four spaced openings 51 are formed in end wall 45 to receive a corresponding number of wires 57 which enter the spray booth 13 through the openings 51 and exit spray booth 13 through the four openings 53 formed in end wall 47 which are aligned with openings 51. Although not shown in the drawings, the openings 51 and 53 may be made larger or smaller and in shapes other than circular depending upon the type of elongated article to be coated in spray booth 13. For example, pipe of several inches in diameter could be accommodated in spray booth 13 by enlarging openings 51 and 53 and providing suitable means to advance such pipe through the spray booth 13.

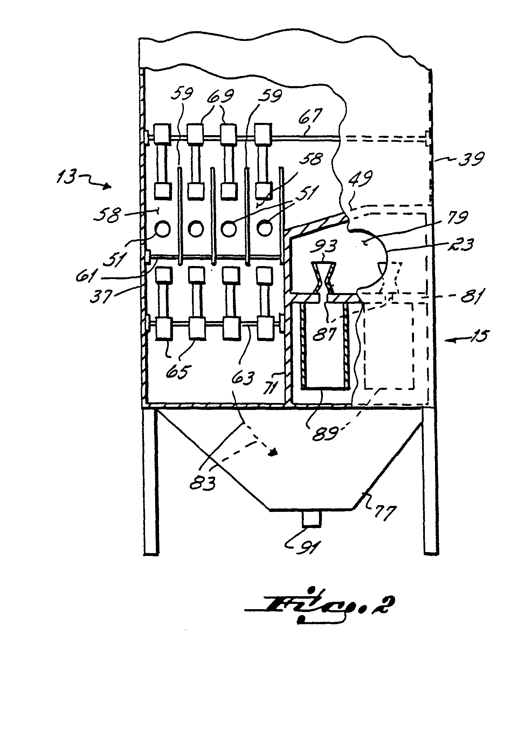

A series of partitions formed of a thin sheet material and each labeled with the reference numeral 59 are mounted at one end to the end wall 45 and extend perpendicularly thereto longitudinally along at least a portion of the length of spray booth 13 where they are secured adjacent their other end to a slat 61. The partitions 59 are mounted in the space between adjacent openings 51 such that each individual wire 57 extending through a separate opening 51 is disposed within an isolated compartment 58 formed by adjacent partitions 59. As shown in Figure 2, one of the compartments 58 is formed by a partition 59 and the side wall 37. In addition, it should be understood that the use of four openings 51, 53 herein is intended only as an illustration of the apparatus and a greater or lesser number of openings could be utilized with a corresponding number of partitions 59 as desired.

The purpose of at least partially isolating each wire 57 within a separate compartment 58 is to control the spray pattern of powder applied to such wires 57. As shown in the drawings, a lower rod 63 extends between side wall 37 and an interior side wall 71 of the filter recovery system 15, along which four lower electrostatic spray guns 65 are mounted. Spray guns 65 are of known construction and are operable to apply an electrostatic charge to solid particulate material or powder and spray such powder onto a substrate such as the wires 57. As shown in the drawings, one spray gun 65 is disposed below each of the wires 57 within each of the compartments 58. In addition, an upper rod 67 is disposed between side walls 37 and 39 a distance above and laterally spaced from lower rod 63 and end wall 45. The upper rod 67 acts as a mount for four upper spray guns 69, which are identical in structure and operation to lower spray guns 65. To assure complete and even coverage of each wire 57, there is an upper spray gun 69 disposed within each compartment 58 immediately above the wires 57.

Commercially available electrostatic spray guns produce a defined spraying pattern of powder for the coating of articles within a spray booth. The spacing of such spray guns within a powder spray booth and the volumetric flow of powder therethrough must be carefully controlled in any powder spray booth to achieve the desired thickness and coverage of the powder coating. It has been found that for continuous articles such as the wire 57, the compartmentalized structure provided by partitions 59 in spray booth 13 is necessary to properly control the spray pattern of upper and lower spray guns 65 and 69. Accordingly, one lower spray gun 65 and one upper spray gun 69, which are spaced apart, are provided for each compartment 58 to properly coat each individual wire 57. Such partitions 59 at least partially isolate the individual wires 57 from one another and from the spray guns 65, 69 in an adjacent compartment 58 to achieve the proper coating thickness and coverage.

Although not illustrated in the drawings, additional spray guns 65, 69 may be utilized and the length of partitions 59 may be shortened or extended, depending on the requirement of a particular application. For example, the number and flow rate of spray guns 65, 69 required to properly coat a relatively thin gauge wire would be much less than that required for pipe having a 6 inch (15 cm) diameter. The powder spray booth 13 may be readily adapted to accommodate such wide ranges of article dimensions, by simply altering the length of partitions 59 and providing more or less electrostatic spray guns 65 and/or 69. Thus, coating of large pipes,for example, may require the lengthening of partitions 59 and the addition of more spray guns 65 and/or 69 in comparison to the embodiment shown in the drawings.

Referring now to the base portion of the spray booth 13, the details of the filter/recovery system 15 utilised herein will be discussed. The structure and operation of the filter/recovery system 15 are known in the art and will be discussed briefly herein to illustrate the complete operation of apparatus 11. For example, one cartridge type fiter recovery system suitable for use in combination with the booth 13 is disclosed in Browning US Patent No. 4,277,260 issued July 7, 1981. The embodiment of the filter/recovery system 15 shown in the drawings generally includes an interior side wall 71, the lower portion of side wall a sloped floor area 49, the lower portion of end walls 45 and 47 and three powder collectors 77 only one of which is shown. A clean air chamber 79 is disposed between the angled floor area 49 and extends between tne upper portion of side wall 39, the angled floor area 49, the upper porition of interior side wall 71 and a bottom chamber wall 81.

As mentioned above, a hole 23 is formed in end wall 45 allowing clean air chamber 79 to communicate through the duct 19 with absolute filter 17. Thus, a negative pressure is created in clean air chamber 79 by the operation of blower 27 which draws air therethrough.

The interior side wall 71 extends downwardly from the angled floor area 49 to form an air flow passage 83 between it and the side wall 37. The air flow passage 83 is elongated in the direction of travel of the wire 57 within spray booth 13 and forms a path for the excess powder which does not adhere to the wire 57 to flow into the powder collectors 77.

The clean air chamber 79 is provided with multiple holes 87 formed in the bottom chamber wall 81 each of which is capped by a static cartridge filter 89. The static cartridge filters 89 may be removably attached to the bottom chamber wall 81 by any suitable means. Although not shown in the figures, the holes 87 in bottom chamber wall 81 and the associated static cartridge filters 89 may be arranged in three banks of, 6 filters for a total of 18 filters to achieve an acceptable filtering capability.

Below the banks of cartridge filters 89, each of the three powder collectors 77 tapers downwardly in the shape of a pyramid to receive excess powder from the air within spray booth 13. At the apex of each pyramid shaped powder collector 77 is a venturi pump 91 or other suitable means to transport the collected powder to a recycling bin or other storage means for future use or discarding. Other means for transporting powder from the collector 77 could also be used.

Interiorly of the clean air chamber 79, venturi throats 93 are positioned above and around each of the holes 87 in bottom chamber wall 81 through which filtered air passes. Air solenoid means (not shown) may be associated with each of the venturi throats 93 to provide a stream of air for dislodging excess powder which may collect therein. Such dislodged powder falls 77 into respective powder collectors.

In operating the powder spraying apparatus 11, the blower 27 is first activated to create a negative pressure in the clean air chamber 79 and thereby cause air flow inwardly from outside the spray booth 13 through the access opening 41 in side wall 37. This air flow, after passing through the upper portion of spray booth 13, flows downwardly through air flow passage 83 and into powder collectors 77. The air flow is then caused to change direction from generally downwardly toward the powder collectors 77, to an upward direction through static cartridge filters 89 and into clean air chamber 79. The now filtered air then flows through the duct 19 to and through the absolute filter 17 where any residual power which has, passed through the cartridge filters 89 is extracted. The cartrdige filters 89 are generally effective in extracting more than 99% of the powder entering the filter/recovery system 15 so that very little powder reaches the filters 31 of absolut filter 17. Clean air is then exhausted from the absolute filter 17 back into the plant or to the atmosphere.

As soon as the air flow is initiated by blower 27, the powder may be turned on and sprayed by upper and lower spray guns 65 and 69 onto the wires 57 within each of the compartments 58 formed by partitions 59. As mentioned above, the powder particles are conventionally charged with a high voltage, electrostatic charge with the wire 57 or other continuous article being grounded through the reel 55 or other means utilized to advance such articles through spray booth 13. The electrostatic charge increases the percentage of powder deposited onto the wires 57 and assists in retaining such particles on wires 57.

All oversprayed powder is maintained in the spray booth 13 by the incoming air flow through the booth openings 41. The oversprayed material either falls by gravity to the bottom of the spray booth 13 or becomes entrained in the air flow moving downwardly in the spray booth 13 through air flow passage 83. A large portion of the powder entering air flow passage 83 falls by gravity to the bottom of one of the pyramid shaped powder collectors 77. The remaining powder is airborne and it either falls out of the air and collects in the powder collectors 77 as the air flow is changed from a generally downward direction in the air flow passage 83 to an upward direction toward the cartridge filters 89, or such powder filtered out of the air is by cartridge filters 89.

## Claims

1. An apparatus for coating elongated articles moving therethrough with a powder material comprising a powder spray booth having a pair of spaced, opposed end walls and electrostatic powder spray gun means disposed within the powder spray booth and operable to dispense electrostatically charged powder onto the elongated articles for coating thereof characterised in that one of the end walls (45) is formed with a plurality of spaced, first openings (51) and the other of the end walls (47) is formed with a plurality of second, spaced openings in alignment with the first openings, the first and second openings each being formed to receive at least one of the elongated articles (57) when moved inwardly through a first opening and outwardly through an aligned second opening, in that a partition (59) is mounted between adjacent 'first' openings (51) in one end wall (45) and extends toward the other end wall (47), adjacent partition means forming individual compartments (58) therebetween in which respective aligned first and second openings (51 and 53) are disposed to separate the elongated articles from one another and in that an electrostatic powder spray gun means (65, 69) is disposed within each of the compartments.

2. Apparatus as claimed in Claim 1 wherein the powder spray gun means includes at least one upper powder spray gun (69) disposed in each of the compartments above the path of an elongated article (57) moving therein, and at least one lower powder spray gun (65) disposed in each of the compartments (58) below the path of the elongated article and spaced from the one upper spray gun in each respective compartment.

3. Apparatus as claimed in Claim 1 or 2 including filter/recovery means (15) and absolute filter means (17) adapted for the collection and filtering of excess powder dispensed from the dispensing means but not coating the elongated articles (57).

4. Apparatus as claimed in any of the preceding claims wherein the powder spray gun means includes at least one upper powder spray gun and lower powder spray gun, said powder spray guns being disposed on opposite sides of said articles and spaced from one another.

5. Apparatus as claimed in any of the preceding claims wherein the partitions (59) are mounted in a vertical plane perpendicular to said end walls (45, 47) and extending therebetween.

6. Apparatus as claimed in any preceding claim wherein the powder spray booth has a ceiling section, base section and a pair of spaced, opposed side sections each formed with an access opening.

7. A method of simultaneuosly coating a plurality of elongated articles with a powder material using a spray booth having opposed end walls each formed with a plurality of spaced openings shaped to receive at least one elongated article, the spray booth being separated into a plurality of compartments by partition means disposed between each of said spaced openings, the compartments separating elongated articles received by respective openings from one another, powder spraying means being associated with each individual compartment, characterised in that elongated members are moved through respective ones of the spaced openings and the corresponding individual compartments, and coating the elongated members within each of the individual compartments with powder from the powder spraying means associated with each of the compartments.

## Patentansprüche

1. Apparat zur Beschichtung von sich durch diesen bewegenden länglichen Gegenständen mit einem Pulvermaterial, umfassend einen Pulversprühkasten mit einem Paar in einem Abstand voneinander und einander gegenüber angeordneter Stirnwände und einer innerhalb des Pulversprühkastens befindlichen, elektrostatischen Pulversprühpistolenvorrichtung zum Verteilen von elektrostatisch geladenem Pulver auf die länglichen Gegenstände zwecks deren Beschichtung, dadurch gekennzeichnet, daß eine der Stirnwände (45) mit einer Vielzahl von in einem Abstand voneinander angeordneten, ersten Öffnungen (51) und die andere der Stirnwände (47) mit einer Vielzahl von zweiten, in einem Abstand voneinander angeordneten Öffnungen ausgebildet ist, die sich in einer Linie mit den ersten Öffnungen befinden, wobei die ersten und die zweiten Öffnungen jeweils so ausgebildet sind, daß sie wenigstens einen der länglichen Gegenstände (57) aufnehmen, wenn diese nach innen durch eine erste Öffnung und nach aussen durch eine in einer Linie befindliche zweite Öffnung bewegt werden, dadurch, daß zwischen benachbarten 'ersten' Öffnungen (51) in einer Stirnwand (45) eine Trennung (59) angebracht ist, die in Richtung auf die andere Stirnwand (47) verläuft, wobei benachbarte Trennvorrichtungen einzelne Abteilungen (58) zwischen sich bilden, in denen sich entsprechende, in einer Linie befindliche erste und zweite Öffnungen (51 und 53) befinden, um die länglichen Gegenstände voneinander zu trennen, und dadurch, daß sich innerhalb jeder der Abteilungen eine elektrostatische Pulversprühpistolenvorrichtung (65, 69) befindet.

2. Apparat nach Anspruch 1, worin die Pulversprühpistolenvorrichtung wenigstens eine obere, in jeder der Abteilungen oberhalb des Weges eines sich darin bewegenden länglichen Gegenstandes (57) befindliche Pulversprühpistole (69), sowie wenigstens eine in jeder der Abteilungen (58) unterhalb des Weges des länglichen Gegenstandes befindliche und in einem Abstand von der einen oberen Sprühpistole in jeder entsprechenden Abteilung angeordnete untere Sprühpistole beinhaltet.

3. Apparat nach Anspruch 1 oder 2 mit einer Filtrier/Rückgewinnungsvorrichtung (15) und einer absoluten Filtriervorrichtung (17) zum Sammeln und Filtrieren von überschüssigem Pulver, das von der Ausgabevorrichtung ausgegeben wurde, die länglichen Gegenstände (57) jedoch nicht beschichtet.

4. Apparat nach einem der vorhergehenden Ansprüche, worin die Pulversprühpistolenvorrichtung wenigstens eine obere Pulversprühpistole und eine untere Pulversprühpistole aufweist, wobei sich diese Pulversprühpistolen auf den genannten Gegenständen gegenüberliegenden Seiten in einem Abstand voneinander angeordnet befinden.

5. Apparat nach einem der vorhergehenden Ansprüche, worin die Trennungen (59) in einer senkrechten Ebene lotrecht zu den genannten Stirnwänden (45, 47) und dazwischen verlaufend befestigt sind.

6. Apparat nach einem der vorhergehenden Ansprüche, worin der Pulversprühkasten einen Deckenabschnitt, ein Bodenabschnitt und ein Paar in einem Abstand voneinander und einander gegenüber angeordneter Seitenabschnitte aufweist, die jeweils mit einer Eingangsöffnung gebildet sind.

7. Verfahren zum gleichzeitigen Beschichten einer Vielzahl von länglichen Gegenständen mit einem Pulvermaterial mit Hilfe eines Sprühkastens mit einander gegenüberliegenden Stirnwänden, die jeweils eine Vielzahl von in einem Abstand voneinander angeordneten Öffnungen aufweisen, die wenigstens einen länglichen Gegenstand aufnehmen können, wobei der Sprühkasten zwischen jeder der genannten, in einem Abstand voneinander angeordneten Öffnungen durch Trennvorrichtungen in eine Vielzahl von Abteilungen aufgeteilt ist, wobei die Abteilungen von den entsprechenden Öffnungen aufgenommene längliche Gegenstände voneinander trennen und wobei zu jeder einzelnen Abteilung Pulversprühvorrichtungen gehören, dadurch gekennzeichnet, daß längliche Elemente durch die jeweilige der im Abstand voneinander angeordneten Öffnungen und die entsprechenden einzelnen Abteilungen bewegt werden und die länglichen Elemente innerhalb jeder der einzelnen Abteilungen mit Pulver von der zu jeder der Abteilungen gehörigen Pulversprühvorrichtung beschichtet werden.

**Revendications**

1. Un dispositif pour le revêtement d'articles allongés se déplaçant à travers celui-ci à l'aide d'une matière pulvérulente comportant une cabine de projection de poudre ayant une paire de parois d'extrémité espacées, opposées et des pistoles de pulvérisation de poudre électrostatique disposés dans la cabine de projection de poudre et pouvant être actionnés pour distribuer la poudre chargée électrostatiquement sur les articles allongés pour leur revêtement, caractérisé en ce que l'une des parois d'extrémité (45) est munie d'une pluralité de premières ouvertures espacées (51) et l'autre paroi d'extrémité (47) est munie d'une pluralité de secondes ouvertures espacées alignées avec les premières ouvertures, les premières ouvertures, les premières et secondes ouvertures étant chacune conformée pour recevoir au moins un des articles allongées (57) lorsqu'ils se déplacent à l'intérieur et à travers une première ouverture et à l'extérieur à travers une seconde ouverture alignée, et en ce que une cloison (59) est montée entre les premières ouvertures adjacentes (51) dans l'une des parois d'extrémité (45) et s'étend vers l'autre paroi d'extrémité (47), des cloisons adjacentes formant des compartiments individuels (58) entre elles dans lesquels, respectivement, les premières et secondes ouvertures alignées (51 et 53) sont disposées pour séparer les articles allongées les uns des autres, et en ce que des pistolets de pulvérisation de poudre électrostatique (65, 69) sont disposés dans chacun des compartiments.

2. Dispositif selon la revendication 1, dans lequel les pistolets de pulvérisation de poudre comportant au moins un pulvérisation de poudre supérieur (69) disposé dans chacun des compartiments au-dessus du trajet d'un article allongé (57) se déplaçant à l'intérieur, et au moins un pistolet de pulvérisation de poudre inférieur (65) disposé dans chacun des compartiments (58) en-dessous du trajet de l'article allongé et espacé du pistolet de pulvérisation supérieur dans chaque compartiment respectif.

3. Dispositif selon la revendication 1 ou 2 comportant un moyen de récupération/filtrage (15) et un moyen de filtrage parfait (17) adapté pour recueillir et filtrer la poudre en excès distribuée par les moyens de distribution mais ne revêtant pas les articles allongés (57).

4. Dispositif selon l'une quelconque des revendications précédentes dans lequel les pistolets de pulvérisation de poudre comportent au moins un pistolet de pulvérisation de poudre supérieur et un pistolet de pulvérisation de poudre inférieur, lesdits pistolets de pulvérisation étant disposés sur les côtés opposés desdits articles et espacés l'un de l'autre.

5. Dispositif selon l'une quelconque des revendications précédentes dans lequel les cloisons (59) sont montées dans un plan vertical perpendiculaire auxdites parois d'extrémité (45, 47) et disposées entre elles.

6. Dispositif selon l'une quelconque des revendications précédentes, dans lequel la cabine de projection de poudre comporte un plafond, une embase, et un paire de parois latérales espacées et opposées présentant chacune une ouverture d'accès.

7. Un procédé de revêtement simultané d'une pluralité d'articles allongés à l'aide d'une matière pulvérulente utilisant une cabine de projection ayant des parois d'extrémité opposées présentant chacune une pluralité d'ouvertures espacées conformées pour recevoir au moins un article allongé, la cabine de projection étant séparée en une pluralite de compartiments par des cloisons disposées entre chacune desdites ouvertures espacées, les compartiments séparant les articles allongés reçus par les ouvertures respectives l'un de l'autre, des moyens de pulvérisation de poudre étant associés avec chaque compartiment individuel, caractérisé en ce que les éléments allongés sont déplacés respectivement à travers certaines des ouvertures espacées et les compartiments correspondants individuels et le revêtement des éléments allongés effectué dans chacun des compartiments individuels avec la poudre provenant des moyens de pulvérisation de poudre associés avec chacun des compartiments.

Fig.1

*Fig. 2*